Europäisches Patentamt

(19) European Patent Office   (11) Publication number: **0 151 564**

Office européen des brevets   **B1**

(12)   **EUROPEAN PATENT SPECIFICATION**

(45) Date of publication of patent specification: **19.08.87**   (51) Int. Cl.⁴: **C 04 B 14/38**

(21) Application number: **83902458.5**

(22) Date of filing: **17.06.83**

(86) International application number:
**PCT/SE83/00251**

(87) International publication number:
**WO 85/00036 03.01.85 Gazette 85/01**

(54) **PROCESS FOR THE PRODUCTION OF HIGH-FILLED MINERAL FIBRE BASED SHEETS.**

(43) Date of publication of application:
**21.08.85 Bulletin 85/34**

(45) Publication of the grant of the patent:
**19.08.87 Bulletin 87/34**

(84) Designated Contracting States:
**AT BE CH DE FR GB LI LU NL**

(56) References cited:
**GB-A-2 061 344**
**US-A-4 193 841**
**US-A-4 373 992**

(73) Proprietor: **ABERG, Ulf Lennart**
**Stjärnvägen 29**
**S-541 55 Skövde (SE)**

(72) Inventor: **ABERG, Ulf Lennart**
**Stjärnvägen 29**
**S-541 55 Skövde (SE)**

(74) Representative: **Inger, Lars Ulf Bosson**
**L + U INGER Patentbyra HB Garvaregatan 12**
**S-262 00 Ängelholm (SE)**

## Description

Asbestos based sheet products are used in many technical applications. Examples in point are packings, seals, and backing materials. With all these applications the good thermal and mechanical characteristics of asbestos come into play. Similarly, the good chemical resistance of asbestos is utilized in e.g. cylinder head gaskets for petrol or diesel engines. A number of sheets containing asbestos can be laminated and pressed to considerable density. Such a product can be used as a friction material in fabric clutches or mechanical brakes. In backing materials consisting of asbestos with an appropriate binder, what counts is the fact that asbestos does not deteriorate and is stable in respect of moisture variations. Examples of such products are backing materials for PVC coated flooring and wall products.

During recent years medical studies on human beings, previously or currently in contact with asbestos have shown that they are more subject to certain lung diseases than might have been expected. This in turn has led to prohibitions of the use of asbestos or has at least surrounded the application of asbestos with so many stringent legal requirements as to amount to a prohibition, inasmuch as the prescribed dust removal arrangements and other equipment become altogether too costly in economic terms.

Unlike asbestos, so called man-made fibres such as mineral, glass, or slag fibres do not exhibit these medical disadvantages. On the other hand the properties of these fibres are far from being equally good as regards their thermal, chemical or mechanical effects. This has made it difficult to replace asbestos with this type of artificial fibres. In one case a substitute for a backing material has had some success. This product consists in equal parts of mineral fibres (rock fibres), cellulose and latex-type binder. The high proportion of cellulose jeopardizes the resistance to deterioration, and it is therefore necessary to add a deterioration inhibitor.

The high proportion of cellulose also causes insufficient moisture stability (dimensional stability), which is compensated for, for instance, by addition of polyethylene glycol (PEG). A similar product is described in SE—A—7608398. It should, however, be pointed out that an alternative material has appeared on the market in order to get away from the relatively expensive raw materials used in the product described above. This is achieved by adding to the stock large amounts of filler such as kaolin. With this method of production it has proved that problems arise as regards retention, and the yield of material in this process is poor. This product is described in EP—A—3481. A relatively moderate success has been achieved with this product.

As regards the above mentioned application possibilities of using asbestos for the production of packings and friction materials no new products have so far had any great success. As for mechanical brakes monolithic materials containing a large proportion of metals have enjoyed some success.

In summary we may state that it is still very difficult to replace materials containing asbestos. A flexible process suitable for use with more than one of the above application possibilities does not exist. The current sheet forming methods applied in the production of asbestos substitutes are generally intended for one of the products herein discussed only.

The present invention relates to a process for manufacturing sheet-like products for the above applications by basically one and the same machine.

The process aims at producing in a first stage a loosely bound sheet which in a later stage is impregnated with a mixture of binder and filler. The loosely bound sheet initially produced contains mostly mineral fibres (type rock fibres) but can also contain certain smaller amounts of cellulose fibres (including mechanical or thermomechanical wood pulp) or glass fibres of the continuously drawn type having a fibre length which clearly exceeds the average fibre length of rock fibres.

The reason why rock fibres are chosen as the principal primary sheet former consists in the fact that a sheet is produced consisting of a fibre inert to water with relatively good thermal and mechanical characteristics without being too costly. So as to impart a certain tear resistance to the sheet, but in particular by way of process aid in the form of a wet strength imparting agent a certain amount of cellulose is acceptable as long as the dimensional stability in the presence of moisture variations is not lost. The chopped long-fibre glass fibres which are costly are replaced to some extent inasmuch as rock fibres are not long.

In order to obtain at a later stage after the impregnation treatment a sheet with isotropic or at least sufficiently isotropic characteristics as possible, the sheet must be formed in such a way as to ensure that the interstices between the fibres become, as far as possible equally large. This can be achieved by making use of a sheet forming process applied in connection with the non-woven technology. This process is characterized in that use is made of an inclined wire, the stock concentrations being in addition lower than with ordinary flat wire machine. It should be noted at this point that it is also possible to achieve same effect with flat wire machines if the stock is sufficiently diluted.

In order to achieve a sheet sufficiently strong for later impregnation the fibre mix deposited must be bonded.

The bond shall be sufficiently stable to moisture to enable subsequent attainment of adequate wet strength for the impregnation stage. This is brought about by making use of plastic hardening agents with good moisture stability in the first place phenolic resins. Other type of plastic hardening agents such as carbamide or melamine resins are also feasible. In certain cases a more elastic component may be added to this binder in order to avoid excessively pronounced brittleness. This can be achieved with the aid of e.g. SBR latex or other type of latex. Commercial products are URECOLL® mixed with ACRONAL®.

The addition of binder takes place through a breast box located above the wire. For reasons of hygiene it is advisable to provide in addition a special wire for this breast box. The transfer from the first to the second wire can be of the type "poor man's pickup". This breast box has a slot from which the above binder compound flows evenly over the sheet resulting from the previous fibre formation. A suction box must be provided which extends from below the slot for a certain distance beyond the binder feed arrangement. This box which is connected to a vacuum pump serves to suck the binder through the sheet in order to achieve a homogeneous distribution. The amount of binder added can be regulated either by the concentration or by varying the negative pressure in the box. As regards variations of concentration it should perhaps be added that it is also possible to control the binder take-up by varying the viscosity with the aid of various additives.

Once the binder has been added it must be hardened/dried. This can advantageously be done with the aid of conventional drying cylinders but also by means of hot air which is blown on to or through the layer of fibres.

The final stage in the formation of the product consists in impregnation. This can be carried out directly after the production of the basic sheets or only after storage during a relatively long or short period of time.

The impregnation can be carried out in a number of different types of equipment. If a filler contained in the surface is preferred, it is usual to make use of knife or blade coating. If a more homogeneously impregnated product is required, use is made either of a saturation method or a pressing process such as a size press. The choice of equipment depends on the type of filler used. This depends primarily on the characteristics of the impregnating liquid.

It is common for considerably higher concentrations of both binder and filler to be used. The dry substances can amount to as much 80%. This is of course due to the rheological characteristics of the impregnating liquid.

In connection with the manufacture of e.g. dimensionally stable backing materials it has proved to be advantageous to make use of cheap materials such as chalk, which is not affected by moisture. Certain clay minerals have proved to yield interesting friction materials. Furthermore, these substances can advantageously be combined with a certain proportion of metal powder in order to increase their heat conduction and to achieve different friction coefficients. Barytes may also be used in combination with the above materials. In certain cases the friction may become too high and it may then be necessary to make use of a lubricating material, such as graphite or molybdenum sulphide. Use may of course also be made of asbestos but this is not advisable in the light of what has been said in the preamble concerning the danger to health inherent in asbestos. Silicon carbide, silicon nitride, or aluminium oxide may be used to produce ground wood pulp manufactured in accordance with the method described in the invention.

By way of an additional description of the process forming the subject of the invention a plant for carrying out the process is described below. This description is offered by way of a specimen embodiment and does not in any way limit the process.

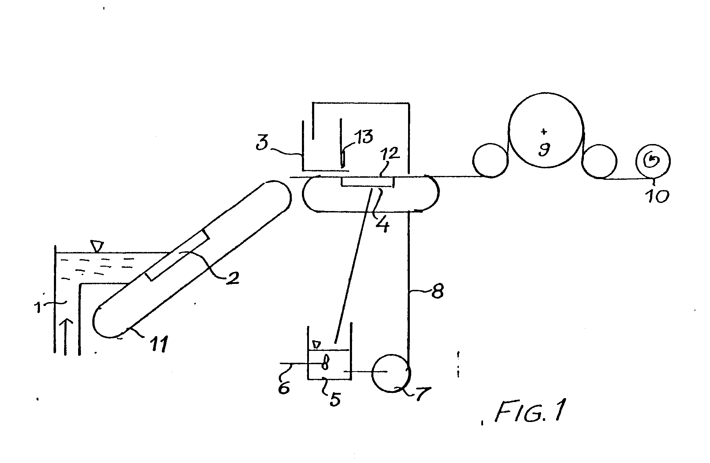

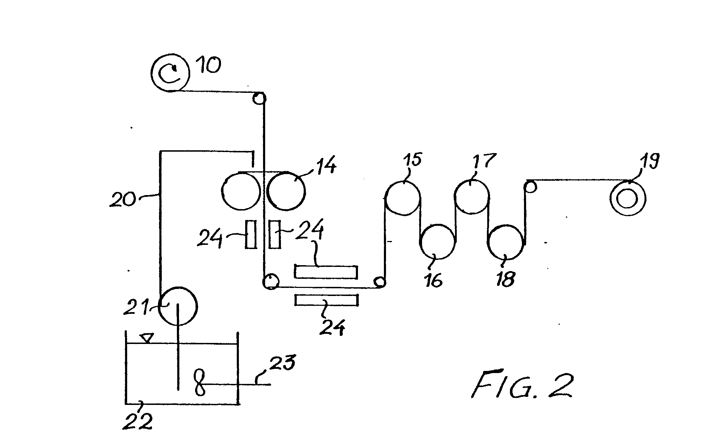

Figure 1 contains a schematic sketch of a machine capable of producing the basic sheet. The figure does not show the equipment for preparing the stock nor the circulation network for the white water. Instead, it shows how a first breast box 1 receives the pulp from below. The endless wire 11 filters out the fibre in the suspension in a manner typical for inclined wire machines, whereby an especially good fibre distribution is achieved, in particular if use is made of lower concentrations than with conventional paper machines. Dewatering may be effected with the aid of a suction box 2, whereupon, as shown in the figure the sheet is transferred to another wire 12 with a second breast box 3 located above this wire. Here as well a suction box 4 is provided which in this application controls the distribution of the binder in the vertical direction of the sheet. The binder is supplied to the second breast box 3 via a line 8 by a pump 7, which is connected with a tank 5. The tank is provided with an agitator 6 to ensure an even concentration. The slot 13 of the second breast box 3 is relatively small (2—5 mm) and must be kept clean in order to achieve even distribution of the binder. For the basic sheet having been impregnated with a binder mixture suitable for the basic sheet drying/hardening is required. To this end, use may be made of a cylinder with contact heat transfer or by means of blowing on to the surface or through the layer of fibres. Once this has been done the product can be wound up on a reeling machine. The figure shows the drying cylinder 9 as a yankee dryer but there is no reason why not several consecutive cylinders should be used as with a conventional paper machine. It is also feasible directly to replace the reeling machine by the impregnation stage. The impregnation stage is described by Figure 2.

Figure 2 shows a system suitable for impregnating the basic sheet with an impregnating solution consisting of a binder and a large amount of filler. In the present case a size press 14 is shown. The latter receives material from a reeling machine 10. The impregnating material is passed from a container to the press nip via a line 20 and pumped by pump 21 which is connected to the container 22 provided with a stirrer 23. The press nip is so adjusted as to partly control the amount of material retained in the sheet. Following the pressing stage an IR stage is provided, the purpose of which is to dry the surface of the material in order to reduce any tendency to stick during subsequent cylinder drying. The IR stages are marked 24 and the cylinders 15 to 18 these being followed by a reeling machine 19 of the same type as the machine 10 described above.

A specimen embodiment is given below. In this example a test formulation is described. This is the principal method by which a large range of products for technical purposes can be produced.

On an inclined wire machine type "HYDRO-FORMER"® (Voith GmbH, Heidelheim, DE) a sheet is produced with a basic weight of 100 g/m². The sheet consists of 72% rock fibres of a type to which tensides are added for easier dispersion in water. In addition 6% of glass fibres of the type VETROTEX® are used, which fibres have a length of 20 mm and a diameter of 13 μm. Further 6% of pine sulphate cellulose is added, which cellulose has been ground to 35 degrees Schopper-Riegler. With regard to binder up to 6% of URECOLL 147C (carbamide resin) and ACRONAL® 240D (acrylic based binder) are used at a ratio of 5:25 (absolutely dry).

This sheet is then passed through a size press, the pressing nip of which has been adjusted to 25.5 N per cm length of press nip. The impregnating material is composed as follows: CIAGO® 1541E (styrene-butadiene rubber, SBRlatex) type binder and MILLICARB® (fine particulate calcium carbonate) type filler. The weight ratio (absolutely dry) was 1:3. In addition 0.3% of a dispersion agent, CALGON® PTH, was added calculated in relation to the amount of MILLICARB®. A further additive consisted of 0.1% defoamer NOPCO® NXZ (surface-active agent) calculated in relation to the absolutely dry binder. Further 0.1% of an antioxidant was added (in relation to the amount of binder). The content of dry substance amounted to 70% and was adjusted by the addition of water. The material was passed at a rate of 30 m/min through a size press, whereby the basis weight of the sheet increased from 100 g/m² to 300 g/m² (more precisely 298 g/m²).

The product thus produced was characterized by a very good dimensional stability (0.1% compared with 0.2% in the case of commercially traded backing products). The breaking load in the direction machine amounted to 103 N per 15 mm compared with 113 N in the compared product, and in the transverse direction to 96.1 N (compared with 67.7 N). The stretch at break amounted as an average to 2.3% (compared with 3.5%).

The product thus produced has been successfully tested as a backing material for PVC flooring material.

## Claims

1. A process for the production of impregnated mineral fibre based filler containing sheets for use as backing materials, friction materials, and packings or similar products, by draining a suspension of fibre on a wire and impregnating the formed sheet with a latex-type organic binder, characterized in that
a) a basic sheet with the following fibre composition
60—100% mineral fibres
0—40% cellulose or mechanical wood pulp
0—40% chopped fibres (type drawn glass fibres)
is formed on a wire which is inclined or on a horizontal wire in which case the suspension concentration is below 1 g/l;
b) a hardening binder from a breast box arranged above the sheet is added to this sheet in an amount of 5—20% of the sheet weight;
c) this sheet is hardened either on drying cylinders or by hot air flowing through the sheet;
d) the bonded sheet thus produced is directly, or after storage, treated with an impregnating material in an impregnation station, the said impregnating material consisting of a latex-type organic binder mixed with a filler in a binder/filler ratio which amounts to 1:1 to 1:10 by weight.

2. A process according to claim 1, characterized in that the hardening resin is based on phenolic resin, urea resin, or melamine resin or a mixture of these, which can be modified by an elastic component of type SBR-latex in an amount of between 1—20%.

3. A process according to claim 1, characterized in that the binder being mixed with a filler consists of a latex-type product or mixtures thereof, whereby preferably SBR-latex or NBR-latex is used.

4. A process according to claim 1, characterized in that the filler present in the impregnating material is one or more of the group consisting of calcium carbonate, talcum, mica, kaolin, or other clay material, baryte, metal powder, preferably iron and copper, molybdenum sulphide, graphite, asbestos, zeolites, aluminium oxide, silicon carbide, and silicon nitride.

## Patentansprüche

1. Verfahren zur Herstellung von füllstoffhaltigen Bögen auf Mineralfaserbasis für die Verwendung als Verstärkungsmaterialien, Reibmaterialien und Packungen oder ähnliche Produkte durch Ablaufenlassen einer Fasersuspension auf einem Sieb und Imprägnierung des gebildeten Bogens mit einem organischen Bindemittel vom Latextyp, dadurch gekennzeichnet, daß man
a) einen Grundbogen mit der folgenden Faserzusammensetzung
60 bis 100% Mineralfasern
0 bis 40% Cellulose oder mechanischer Holzstoff
0 bis 40% zerschnittene Fasern (vom Typ gestreckter Glasfasern)
auf einem Sieb, das geneigt ist, oder auf einem horizontalen Sieb, in welchem Fall die Suspensionskönzentration unter 1 g/l liegt, bildet,
b) ein härtendes Bindemittel aus einem Stoffauflaufkasten, der oberhalb des Bogens angeordnet ist, zu diesem Bogen in einer Menge von 5 bis 20% des Bogengewichtes zufügt,

c) diesen Bogen entweder auf Trockenzylindern oder durch Heißluft, welche durch den Bogen strömt, härtet und

d) den so erzeugten gebundenen Bogen direkt oder nach Lagerung mit einem Imprägniermaterial in einer Imprägnierstation behandelt, wobei das Imprägniermaterial aus einem organischen Bindemittel vom Latextyp bestehenden Material besteht, das mit einem Füllstoff in einem Bindemittel/Füllstoff-Gewichtsverhältnis von 1:1 bis 1:10 vermischt ist.

2. Verfahren nach Anspruch 1, dadurch gekennzeichnet, daß das härtende Harz auf Phenolharzbasis, Harnstoffharzbasis oder Melaminharzbasis basiert oder ein Gemisch dieser ist, welches durch eine elastische Komponente vom SBR-Latextyp in einer Menge zwischen 1 bis 20% modifiziert sein kann.

3. Verfahren nach Anspruch 1, dadurch gekennzeichnet, daß das mit einem Füllstoff vermischte Bindemittel aus einem Produkt vom Latextyp oder Gemischen hiervon besteht, wobei vorzugsweise SBR-Latex oder NBR-Latex verwendet wird.

4. Verfahren nach Anspruch 1, dadurch gekennzeichnet, daß der in dem Imprägniermaterial vorhandene Füllstoff ein oder mehr Materialien der Gruppe Calciumcarbonat, Talkum, Glimmer, Kaolin oder ein anderes Tonmaterial, Baryt, Metallpulver, vorzugsweise Eisen und Kupfer, Molybdänsulfid, Graphit, Asbest, Zeolithe, Aluminiumoxid, Silciumkarbid und Siliciumnitrid ist.

**Revendications**

1. Procédé de production de feuilles à base de fibres minérales imprégnées, contenant une charge, et destinées à s'utiliser comme matériaux de support, matériaux à friction et bourrages ou produits similaires, par égouttement d'une suspension de fibres sur une toile métallique et imprégnation de la feuille formée par un liant organique du type latex, caractérisé en ce que:

(a) on forme une feuille de base présentant la composition suivante de fibres:

    60—100% de fibres minérales

    0—40% de cellulose ou de pâte de bois mécanique

    0—40% de fibres déchiquetées (fibres de verre de type étiré)

sur une toile métallique qui est inclinée ou sur une toile métallique horizontale, auquel cas la concentration de la suspension est inférieure à 1 g/l;

(b) un liant durcissant provenant d'une chambre d'alimentation agencée au-dessus de la feuille est ajouté à celle-ci en une quantité de 5 à 20% du poids de la feuille;

(c) cette feuille est durcie soit sur des tambours de séchage, soit grâce à de l'air chaud circulant à travers la feuille;

(d) la feuille liée ainsi produite est traitée directement, ou après stockage, par une matière d'imprégnation dans un poste d'imprégnation, cette matière d'imprégnation consistant en un liant organique du type latex mélangé avec une charge dans un rapport liant/charge de l'ordre de 1/1 à 1/10 en poids.

2. Procédé suivant la revendication 1, caractérisé en ce que la résine durcissante est à base de résine phénolique, de résine d'urée ou de résine de mélamine, ou d'un mélange de ces résines, que l'on peut modifier par un composant élastique du type latex SBR en une quantité comprise entre 1 et 20%.

3. Procédé suivant la revendication 1, caractérisé en ce que le liant mélangé avec une charge consiste en un produit du type latex ou en mélanges de celui-ci, avec une préférence pour un latex SBR ou un latex NBR.

4. Procédé suivant la revendication 1, caractérisé en ce que la charge existant dans la matière d'imprégnation est constituée par un ou plusieurs membres du groupe comprenant: carbonate de calcium, talc, mica, kaolin ou autre matière terreuse, baryte, poudres métalliques, de préférence de fer et de cuivre, sulfure de molybdène, graphite, amiante, zéolites, oxyde d'aluminium, carbure de silicium et nitrure de silicium.

FIG.1

FIG. 2